# FASCICULE DE BREVET EUROPEEN

(11) **EP 2 401 197 B1**
(45) Date de publication et mention de la délivrance du brevet: **08.07.2015**
(21) Numéro de dépôt: 10706211.9
(22) Date de dépôt: 25.02.2010
(51) Int. Cl.: F01D 7/00, B64D 27/00, B64D 35/06, B64C 11/48, B63H 3/08, B63H 3/06, B64C 11/30, B63H 5/10

(54) **DISPOSITIF A HÉLICES CONTRAROTATIVES AYANT UN MOYEN DE CHANGEMENT DE PAS DES HÉLICES**
VORRICHTUNG MIT GEGENLÄUFIGEN PROPELLERN MIT EINEM MITTEL ZUR BLATTEINSTELLUNG DER PROPELLER
DEVICE WITH COUNTER-ROTATING PROPELLERS HAVING A MEANS FOR CHANGING THE PITCH OF THE PROPELLERS

(30) Priorité: 27.02.2009 FR 0951259
(43) Date de publication de la demande: 04.01.2012
(73) Titulaire: Snecma, 75015 Paris (FR)
(72) Inventeur: BALK, Wouter, F-77000 Melun (FR); GALLET, François, F-75012 Paris (FR)
(74) Mandataire: Ilgart, Jean-Christophe
(86) Numéro de dépôt international: PCT/EP2010/052421
(87) Numéro de publication internationale: WO 2010/097440

(56) Documents cités:
- EP-A1- 1 953 084
- DE-C1- 3 905 282
- GB-A- 2 209 371
- US-A- 3 163 231
- US-A- 3 904 315
- US-A- 4 657 484

## Description

Le sujet de l'invention est un dispositif à hélices contrarotatives ayant un moyen de changement de pas des hélices, alimenté en énergie, le plus souvent de l'huile pouvant être mise sous pression, le moyen étant alors un vérin hydraulique.

Des dispositifs à hélices contrarotatives sont déjà connus dans plusieurs modèles d'aéronefs et sont appréciés puisqu'ils permettent des économies de carburant. Certains comprennent des hélices à pas variable et des moyens pour modifier le pas. Un tel dispositif est connu de GB 2 209 371, qui est considéré comme l'art antérieur le plus proche et décrit les caractéristiques du preambule de la revendication 1. Une difficulté consiste alors à acheminer l'énergie aux actionneurs de façon convenable, puisque le volume inoccupé est peu important et puisque le dispositif comprend des ensembles de pièces tournant à plusieurs vitesses différentes qu'il faut traverser. Ce problème reste présent avec les transmissions se présentant sous forme de train épicycloïdal, permettant de répartir l'énergie d'une turbine entre les deux arbres d'entraînement des hélices tout en assurant les rotations contraires dans le rapport de vitesse voulu. L'actionneur peut être placé à proximité des hélices, dans une cavité entourée par les deux arbres d'entraînement. Il est tentant de faire passer les canalisations d'énergie dans cette cavité centrale du dispositif, le long des arbres d'entraînement, à travers le train épicycloïdal et le long d'un autre arbre creux, lié à la turbine à basse pression et soutenant le train épicycloïdal en l'entraînant; et de prolonger cette canalisation, située dans l'axe de rotation du dispositif, par une canalisation fixe et coudée prenant une direction radiale à travers la turbine. Ce dispositif serait particulièrement simple, mais il a été constaté que le passage de l'huile à travers la turbine très chaude était susceptible de produire une cokéfaction nuisant à la performance de l'actionneur.

On préconise donc ici un autre moyen d'alimentation de l'actionneur en énergie, qui soit dépourvu de cet inconvénient. Sous une forme générale, l'invention est relative à un dispositif à hélices contrarotatives, comprenant un moyen de changement de pas des hélices et une transmission à train épicycloïdal entre une turbine d'entraînement et les hélices, le moyen de changement de pas comprenant un actionneur alimenté en énergie et logé dans une cavité entourée par des arbres concentriques reliant le train épicycloïdal aux hélices, ainsi qu'un système d'acheminement de l'énergie d'un stator à l'actionneur, caractérisé en ce que le système d'acheminement comprend un conduit d'alimentation traversant un carter fixe du stator, le carter fixe s'étendant entre la turbine et le train épicycloïdal, puis un joint dynamique entre une extrémité du conduit et un collecteur circulaire tournant, et enfin des conduits de commande reliant le collecteur à l'actionneur, lesdits conduits de commande traversant un porte-satellites du train épicycloïdal.

Ces aspects de l'invention, ainsi que d'autres, seront maintenant décrits plus en détail au moyen des figures suivantes :
- les figures 1 et 2 illustrent deux vues du dispositif à hélices, sans représentation de l'invention,
- les figures 3 et 4 détaillent les caractéristiques de l'invention,
- la figure 5 représente une variante de réalisation.
- et la figure 6 est une vue en isolé du moyeu porteur des hélices.

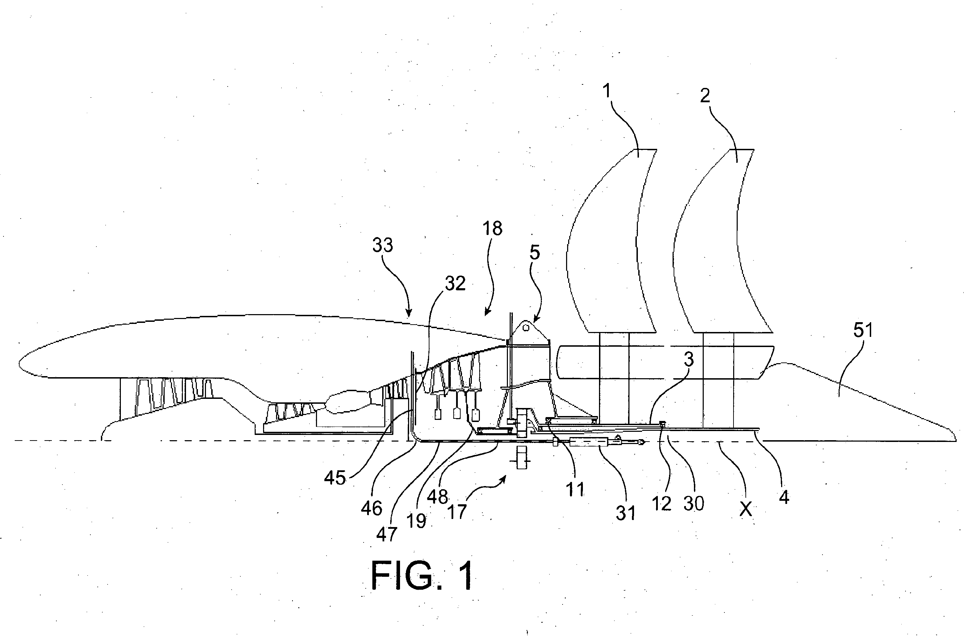

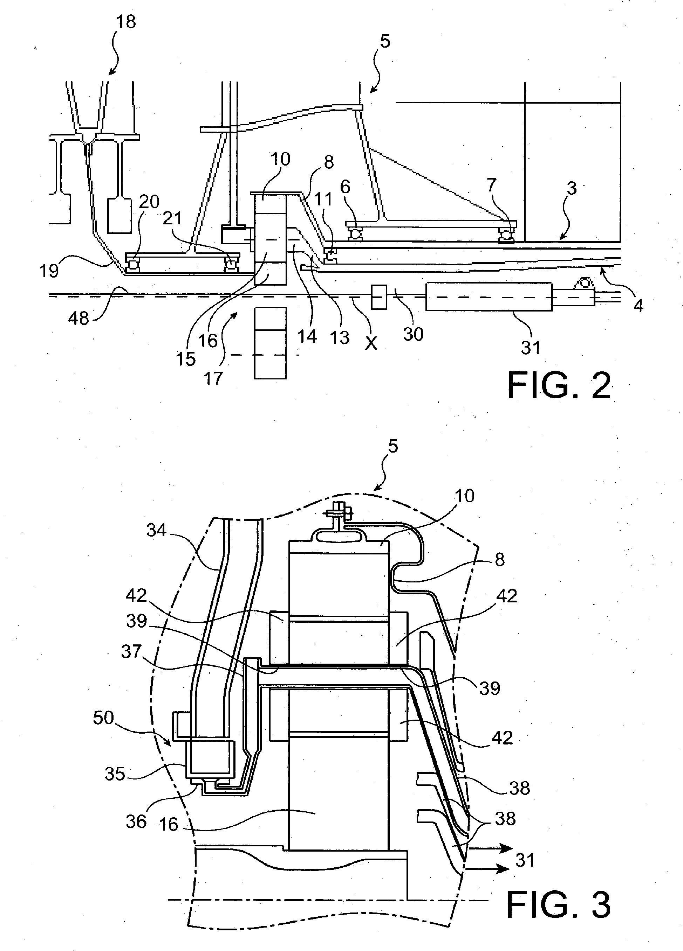

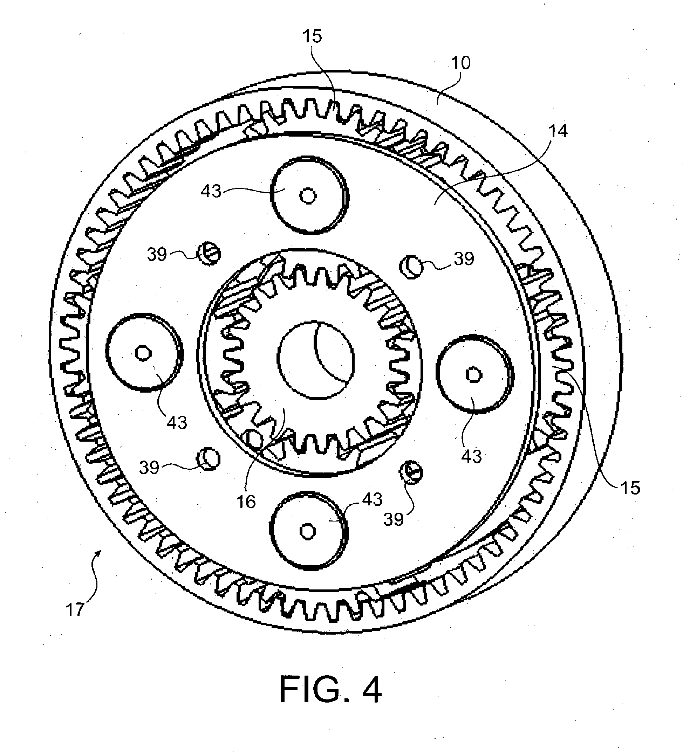

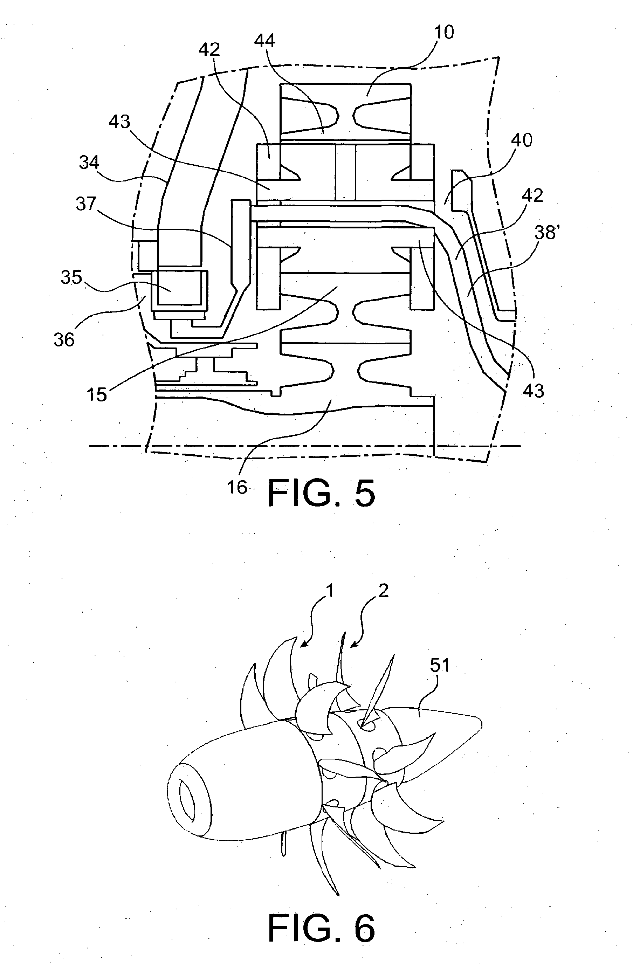

On se reporte aux figures 1 et 2. Le moteur dont l'invention fait partie comprend deux hélices 1 et 2 disposées successivement et tournant autour d'un même axe X. L'hélice amont 1 est montée sur un premier arbre creux 3 et l'hélice aval 2 sur un deuxième arbre creux 4. Le premier arbre creux 3 est en appui sur un carter statique 5 par une paire de roulements 6 et 7 au-delà desquels il s'épanouit en un manchon conique 8 et aboutit à une couronne 10 dentée intérieurement. Le deuxième arbre creux 4 est soutenu par le premier arbre creux 3 au moyen de deux roulements 11 et 12 et s'épanouit en un deuxième manchon conique 13, contenu dans le premier manchon conique 8 et qui est relié à un porte-satellites 14. Le porte-satellites 14 possède des roues dentées satellites 15 réparties sur un cercle et qui engrènent extérieurement avec la couronne 10 et, intérieurement, avec une roue planétaire 16. L'ensemble constitue un train épicycloïdal 17 qui est représenté à la figure 4. La figure 6 illustre le moyeu 51 porteur des hélices 1 et 2.

Une turbine à basse pression 18 est située de l'autre côté du carter statique 5. Elle comprend un troisième arbre creux, qui est un arbre de turbine 19 servant à la faire soutenir par le carter statique 5 à l'aide de deux roulements 20 et 21. L'arbre de turbine 19 s'étend jusqu'à la roue planétaire 16, qu'il soutient.

Le deuxième arbre creux 4 enferme une cavité 30 par laquelle passe l'axe X du dispositif. Cette cavité 30 contient un actionneur 31 de modification du pas des hélices 1 et 2. Il s'agit d'un par exemple d'un vérin hydraulique alimenté en huile; il pourrait s'agir d'un autre type d'actionneur (moteur électrique par exemple), alimenté en un autre moyen lui apportant l'énergie nécessaire à sa fonction (par exemple : électrique). L'actionneur 31 est ici un vérin double pour commander séparément les pas des hélices 1 et 2. Des vérins de ce genre sont connus, ainsi que les transmissions nécessaires pour fournir leur puissance non seulement à la deuxième hélice 2, solidaire du deuxième arbre creux 4 qui entraîne aussi en rotation le vérin 31, mais à là première hélice 1 qui tourne en sens opposé, et ne seront pas décrits davantage. La cavité 30 s'étend non seulement dans les arbres creux 3 et 4, mais à travers le train épicycloïdal 17 et l'arbre de turbine 19, qui soutient la roue planétaire 16. Il est naturel, et il a déjà été envisagé, de faire passer les canalisations d'alimentation de l'actionneur axialement par la cavité 30. Elles comprendraient alors une canalisation d'alimentation 45 essentiellement radiale, traversant un bras 32 de stator 33 entre deux parties de la turbine 18, et comprenant un coude 46, puis, au-delà d'un joint dynamique 47, une canalisation de commande 48 menant à l'actionneur 31 et d'axe X. Le joint dynamique 47 ne se situe pas obligatoirement à l'endroit indiqué, il pourrait se situer plus près du vérin 31. Ainsi qu'on l'a mentionné, cette conception a l'inconvénient d'exposer l'huile à un échauffement important dans le bras 32.

La figure 3 illustre la conception différente et proposée comme l'invention, d'après laquelle la canalisation d'alimentation 34 passe à travers le carter statique 5 en s'étendant en direction radiale. Elle s'interrompt près du train épicycloïdal 17 à une extrémité ouverte 35 qui débouche dans un collecteur 36 circulaire de section en auge d'un joint dynamique 50 qui comprend encore un flasque 37 d'appui contre le porte-satellites 14. Le collecteur 36 est donc fixé au porte-satellites 14 et tourne avec lui. L'huile rejetée par le conduit d'alimentation 34 séjourne dans le collecteur 36 avant que la pression de l'huile ne la fasse pénétrer dans le flasque 37 qui est creux, à double paroi. Des canalisations de commande 38 s'étendent entre le creux du flasque 37 et l'actionneur 31 en traversant le porte-satellites 14 et se rassemblent en arrivant au deuxième manchon conique 13 avant de rejoindre la cavité 30. Elles peuvent être au nombre de quatre, deux pour chacune des hélices 1 et 2, et pour l'aller et le retour de l'huile.

Les canalisations de commande 38 passent à travers des perçages 39 et 40 qui sont établis soit dans des anneaux 42 constituant l'armature du porte-satellites 14, entre les satellites 15, soit à travers les axes 43 de soutien des satellites 15 par des paliers 44. La première construction est représentée aux figures 3 et 4. L'autre construction est représentée à la figure 5, où on voit que les canalisations de commande, maintenant référencées par 38', occupent une portion de la section des perçages 40 tout en permettant à un débit partiel d'huile d'arriver aux paliers 44. Les perçages 39 peuvent évidemment être omis alors.

On a décrit un actionneur 31 hydraulique alimenté en huile. Quoique l'invention soit particulièrement avantageuse alors, elle n'est pas limitée à ces actionneurs mais pourrait être appliquée par exemple à des actionneurs 31 électriques placés au même endroit, les canalisations hydrauliques constituant les conduits étant remplacées par des conduits d'énergie électrique représentés par des gaines rigides de câbles électriques et le joint dynamique 50 par un joint dynamique adapté, par exemple à brosse, le collecteur étant alors une piste conductrice circulaire sur laquelle frotte la brosse finissant le câble établi à travers le carter. La disposition générale du système ne serait pas changée.

## Revendications

1. Dispositif à hélices contrarotatives (1,2), comprenant un moyen de changement de pas des hélices et une transmission à train épicycloïdal (17) entre une turbine d'entraînement (18) et les hélices, le moyen de changement de pas comprenant un actionneur (31) alimenté en énergie et logé dans une cavité (30) entourée par des arbres concentriques (3,4) reliant le train épicycloïdal (17) aux hélices (1,2), ainsi qu'un système d'acheminement de l'énergie d'un stator (33) à l'actionneur, **caractérisé en ce que** le système d'acheminement comprend un conduit d'alimentation (34) traversant un carter statique (5) du stator, le carter statique s'étendant entre la turbine (18) et le train épicycloïdal (17), puis un joint dynamique (50) entre une extrémité du conduit d'alimentation et un collecteur circulaire (36) tournant, et enfin des conduits de commande (38, 38') reliant le collecteur à l'actionneur, lesdits conduits de commande traversant un porte-satellites (14) du train épicycloïdal.

2. Dispositif selon la revendication 1, **caractérisé en ce que** l'énergie est de l'électricité et l'actionneur est électrique, le joint dynamique étant un joint électrique, le collecteur circulaire tournant ayant une piste conductrice circulaire sur laquelle frotte l'extrémité du conduit d'alimentation.

3. Dispositif selon la revendication 1, **caractérisé en ce que** le système d'acheminement comprend encore des conduits de lubrification (51) s'étendant du collecteur circulaire à des paliers (44) de support de roues dentées satellites (15) sur le porte-satellites (14).

4. Dispositif selon les revendications 1 et 2, **caractérisé en ce que** les paliers des satellites comprennent des perçages (40) à travers des axes (43) établis sur le porte-satellites, et les conduits de commande (38') s'étendent à travers lesdits perçages.

5. Dispositif selon la revendication 1, **caractérisé en ce que** les conduits de commande (38) traversent un anneau (42) constituant une armature du porte-satellites (14).

## Patentansprüche

1. Vorrichtung mit gegenläufigen Propellern (1, 2), die ein Mittel zur Blatteinstellung der Propeller und eine Kraftübertragung mittels Planetengetriebezug (17) zwischen einer Antriebsturbine (18) und den Propellern aufweist, wobei das Mittel zur Blatteinstellung ein Stellglied (31) umfasst, das energieversorgt ist und in einem Hohlraum (30) sitzt, der von konzentrischen Wellen (3, 4) umgeben ist, die den Planetengetriebezug (17) mit den Propellern (1, 2) verbinden, sowie ein Zuführungssystem der Energie eines Stators (33) zu dem Stellglied aufweist,
**dadurch gekennzeichnet,**
**dass** das Zuführungssystem eine durch ein statisches Gehäuse (5) des Stators verlaufende Versorgungsleitung (34) umfasst, wobei das statische Gehäuse sich zwischen der Turbine (18) und dem Planetengetriebezug (17) erstreckt, ferner eine Bewegungsverbindung (50) zwischen einem Ende der Versorgungsleitung und einer drehenden kreisförmigen Sammelleitung (36) umfasst, und schließlich Steuerleitungen (38, 38') umfasst, die die Sammelleitung mit dem Stellglied verbinden, wobei diese Steuerleitungen durch einen Planetenradträger (14) des Planetengetriebezugs hindurch verlaufen.

2. Vorrichtung nach Anspruch 1,
**dadurch gekennzeichnet,**
**dass** die Energie elektrische Energie ist und das Stellglied ein elektrisches Stellglied ist, wobei die Bewegungsverbindung eine elektrische Verbindung ist, wobei die drehende kreisförmige Sammelleitung eine kreisförmige Leiterbahn aufweist, auf der das Ende der Versorgungsleitung reibt.

3. Vorrichtung nach Anspruch 1,
**dadurch gekennzeichnet,**
**dass** das Zuführungssystem ferner Schmierleitungen (51) aufweist, die sich von der kreisförmigen Sammelleitung bis zu Führungslagern von Planetenzahnrädern (15) auf dem Planetenradträger (14) erstrecken.

4. Vorrichtung nach den Ansprüchen 1 und 2,
**dadurch gekennzeichnet,**
**dass** die Lager der Planetenräder durchgehende Bohrungen (40) durch Achsen (43) aufweisen, die an dem Planetenradträger vorgesehen sind, und die Steuerleitungen (38') durch diese Bohrungen hindurch verlaufen.

5. Vorrichtung nach Anspruch 1,
**dadurch gekennzeichnet,**
**dass** die Steuerleitungen (38) durch einen Ring hindurch verlaufen, der eine Verstärkung des Planetenradträgers (14) bildet.

## Claims

1. A device with counter-rotating propellers (1, 2), comprising a means for changing the pitch of the propellers and an epicycloidal gear train transmission (17), between a driving turbine (18) and the propellers, the pitch changing means comprising an actuator (31) supplied with energy and housed in a cavity (30) surrounded by concentric shafts (3, 4) connecting the epicycloidal gear train (17) to the propellers (1, 2), as well as a system for transporting the energy of a stator (33) to the actuator, **characterized in that** the transport system comprises a supply conduit (34) passing through a static case (5) of the stator, the static case extending between the turbine (18) and the epicycloidal gear train (17), and then a dynamic joint (50) between one end of the supply conduit and a rotating circular collector (36), and finally control conduits (38, 38') connecting the collector to the actuator, said control conduits passing through a planet carrier (14) of the epicycloidal gear train.

2. The device according to claim 1, **characterized in that** the energy is electricity and the actuator is electric, the dynamic joint then being an electric joint, the rotating circular connector having a circular conductive track on which the end of the supply conduit rubs.

3. The device according to claim 1, **characterized in that** the transport system further comprises lubrication conduits (51) extending from the circular collector to bearings (44) supporting toothed planetary wheels (15) on the planet carrier (14).

4. The device according to claims 1 and 2, **characterized in that** the bearings of the planets comprise drill holes (40) through axes (43) established on the planet carrier, and the control conduits (38') extend through said drill holes.

5. The device according to claim 1, **characterized in that** the control conduits (38) cross a ring (42) forming a framework of the planet carrier (14).
